# EUROPEAN PATENT APPLICATION

(11) **EP 3 793 184 A1**
(43) Date of publication of application: **17.03.2021**
(21) Application number: 19196836.1
(22) Date of filing: 11.09.2019
(51) Int. Cl.: H04N 5/222, A63B 24/00, G06K 9/00, G06T 7/292, G08B 13/196, H04N 5/232, H04N 5/247, H04N 7/18

(54) **METHOD FOR OPERATING A ROBOTIC CAMERA AND AUTOMATIC CAMERA SYSTEM**

(71) Applicant: EVS Broadcast Equipment SA, 4102 Seraing (BE)
(72) Inventor: Vounckx, Johan, 3210 Linden (BE); Barnich, Olivier, 4000 Liège (BE)
(74) Representative: Rossmanith, Manfred

(57) **Abstract**

A method for operating an automatic camera system comprising a main camera, a robotic camera and a production server is suggested. The method comprises receiving video images from the main camera capturing a scene and determining parameters of the main camera by an algorithm (403,404) while it captures the scene. Based on the parameters of the main camera, parameters for the robotic camera are estimated such that the robotic camera essentially captures the same scene as the main camera but from a different perspective. The robotic camera automatically provides a video stream, e.g. a close-up view of the same scene, i.e. without any human intervention. The images of the robotic camera are made available for a production director who can utilize the close-up images of the robotic camera for the broadcast production without spending additional efforts to prepare the close-up. Furthermore, an automatic camera system is suggested for implementing the method.

## Description

### Field

The present disclosure relates to a method for operating an automatic camera system and an automatic camera system comprising a robotic camera.

### Background

In today's live broadcast production, a plurality of staff is needed to operate the production equipment: camera men operate cameras including robotic cameras, a production director operates a video mixer, and another operator operates audio devices. Often small broadcast companies cannot afford such a big staff and, therefore, support by automatic systems and processes can provide a contribution to reconcile quality expectations from viewers with the resource constraints of the broadcast company.

Broadcast productions covering sports events rely inevitably on camera images of a match or game. The cameras are operated by cameramen that either operate the camera independently based on their understanding of a scene, or because they receive instructions from a director. The operational cost of the cameramen is a significant portion of the total production cost. One possible approach to respond to the cost pressure is to utilize automatic broadcasting with robotic cameras that are operated automatically. In most cases the cameras are controlled by a simple object tracking paradigm such as "follow the ball" or "follow the player". However, the result of this approach leaves room for improvement.

Today's state-of-the-art in camera automation includes techniques where a single camera covers a complete scene (e.g. a complete soccer field). Image processing techniques select a part out of this image view. In general, these technologies suffer from bad zooming capabilities because a single image sensor needs to cover a complete playing field. Even in case of a 4K camera, the equivalent of a regular HD image would still cover half of the playing field. As soon as one wants to zoom in on a smaller portion of the field, the resolution becomes problematic in the sense that image resolution does not meet the viewers' expectations anymore.

A second problem is the fact that in the commonly used approaches every camera is located at a fixed position, and hence the resulting view is always from that specific position, including the full perspective view. Recently efforts have been made to compensate for the perspective (e.g. disclosed in EP17153840.8). This latter approach reduces optical distortions, but the camera is still at a fixed position.

A third problem is that the techniques that are used to cut a smaller image out of a large field-covering image are generally technically acceptable, but do not meet the standards in professional broadcast.

In the paper "Mimicking human camera operators" published as https://www.disneyresearch.com/publication/mimicking-human-camera-operators/ a different approach is proposed that includes tracking exemplary camera work by a human expert to predict an appropriate camera configuration for a new situation in terms of P/T/Z (Pan/Tilt/Zoom) data for a robotic camera.

Likewise, US 2016/0277673 A1 discloses a method and a system for mimicking human camera operation involving the human operated camera and a stationary camera. During a training phase the method comprises training a regressor based on extracted feature vectors from the images of the stationary camera and based on P/T/Z data from the human operated camera. After the training phase, when the regressor is trained, an application running on a processor enables determining P/T/Z data for a robotic camera utilizing feature vectors extracted from images of the robotic camera. The goal is to mimic with the robotic camera a human operated camera by controlling the robotic camera to achieve planned settings and record video images that resemble the work of a human operator.

There remains a desire for an alternative automatic camera system configured to enhance the work of a human camera operator.

### Summary

According to a first aspect the present disclosure suggests a method for operating an automatic camera system comprising at least one main camera, a robotic camera and a production server. The method comprises receiving video images from the at least one main camera capturing a scene; determining parameters of the at least one main camera while it captures the scene, wherein the parameters define location and operating status of the at least one main camera; processing the parameters of the at least one main camera to estimate parameters for the robotic camera, wherein the parameters define location and operating status of the robotic camera such that the robotic camera captures the scene or a portion of the scene from a different perspective than the at least one main camera; receiving video images from the robotic camera; analysing the video images from the robotic camera, according to an algorithm to determine whether the video images meet predefined image criteria; and if one or several image criteria are not met, adapting one or several of the parameters of the robotic camera such that the video images from the robotic camera meet or at least better meet the predefined image criteria.

There are different options for determining the parameters of the at least one main camera. The broadest concept of the present disclosure is independent of the way the parameters are determined. Once determined the parameters are utilized to control the robotic camera to capture the same scene as the at least one main camera but from a different perspective. Since the robotic camera typically captures the scene with a bigger zoom, it contains more details of the scene. The method according to the present disclosure exploits these details to refine the position of the robotic camera to make sure that an object of a close-up image is well captured by the robotic camera.

A typical field of use for the present disclosure is a broadcast production covering a game, such as football (soccer), basketball and the like. The images of the robotic camera are made available for a production director who can utilize e.g. close-up images of the robotic camera for the broadcast production without spending additional efforts to prepare the close-up because it is prepared automatically. In addition to that, no extra camera man is required to capture the close-up. The refinement of the position of the robotic camera aims at avoiding any obstruction of the object of the close-up. An object of the close-up is for instance a player in possession of the ball.

In an embodiment the method further comprises receiving the video images of the at least one main camera and/or the robotic camera at the production server. The production server hosts applications and algorithms necessary for implementing the method of the present disclosure.

In an advantageous embodiment the method further comprises analysing the video images from the at least one main camera for determining parameters of the at least one main camera. Image analysis is one option for determining the parameters of the at least one main camera. One specific method is the so-called pinhole method is one method for determining the parameters of the camera by analysing the image captured by the camera.

Advantageously the method further comprises receiving video images from one or several human operated cameras and/or one or several stationary wide field-of-view cameras serving as at least one main camera. Both types of cameras are appropriate for taking high-quality video images of the game because they are operated to continuously capture the most interesting scenes in a game.

In this case the method may further comprise combining the entirety of the parameters of the one or several human operated cameras and/or one or several stationary wide field-of-view cameras to estimate parameters for the robotic camera such that the robotic camera captures the scene or a portion of the scene from a different perspective than the human operated cameras. Advantageously, the combination of multiple camera angles allows not only to have a much larger coverage and resolution, but also to construct a 3D model of the scene, amongst others based on triangularization, which contains more information than a planar 2D single camera projection.

In a further development the method further comprises processing the parameters of the at least one main camera to estimate parameters for a plurality of robotic cameras wherein the parameters associated with one specific robotic camera define location and operating status of this specific robotic camera such that the robotic camera captures the scene or a portion of the scene from a different perspective than the at least one main camera.

Employing a plurality of robotic cameras in a broadcast production provides for a corresponding number of additional views of the captured scene and thus increases the options of the broadcast director to create an appealing viewing experience for viewers following the game in front of a TV.

In an advantageous embodiment the method further comprises
- receiving and analysing video images from each robotic camera to determine adapted parameters for each robotic camera; and
- using the adapted parameters to individually refine the setting of each robotic camera.

The analysis of the images from each robotic camera includes player position detection, ball position detection and applying rules of the game or other rules to identify a fraction of the image that interests viewers the most. This fraction of the image corresponds to a region of interest.

The refinement of the setting of the robotic camera aims at improving the selection of the images captured by the robotic cameras to extract a region of interest and improving the image of the close-up in the sense that the object of the close-up is not obstructed by another player or another person stepping into the field-of-view of the robotic camera.

In case several robotic cameras are used in a broadcast production, the quality of the video image can be improved by refining the parameters of each robotic camera.

In a practical embodiment the method further comprises
- capturing a close-up view of the scene with the robotic camera(s). The close-up views of a scene represent video feeds that are very useful for a production director to enhance the viewing experience of the viewers of the game by the broadcast production.

In an alternative embodiment the method further comprises
- reading sensor outputs of sensors mounted in the at least one main camera and/or a tripod carrying the at least one main camera to determine the parameters of the at least one main camera defining location and operating status of the at least one main camera. Instead of analysing the video images captured by the at least one main camera, the sensor data are used to deduct the parameters of the at least one main camera. Reading the sensor outputs is a second option for determining parameters of the at least one main camera.

Advantageously, the method may further comprise receiving a trigger signal that is linked with predefined parameters of the robotic camera. For instance, the trigger signal indicates the occurrence of a corner or penalty in a football game. The parameters for the robotic camera are predefined and linked with the specific trigger signal. The trigger signal is issued by the application analysing the images of the at least one main camera or the robotic cameras or may be manually issued by the production director. In response to the presence of the trigger signal the production server issues corresponding command signals to the robotic cameras. Utilizing the trigger signal is a third option for determining parameters of the at least one main camera.

In a further advantageous embodiment, the method further comprises manually selecting an area in the image of the at least one main camera; determining parameters for the robotic camera, wherein the parameters define location and operating status of the robotic camera such that the robotic camera captures a scene corresponding to the area selected in the image of the at least one main camera.

This option enables the production director to override the automatic algorithm normally controlling a robotic camera. The director of a local broadcaster may select a specific player who is most interesting for his audience while the at least one main camera captures a broader scene. This feature is particularly interesting for local broadcasters who want to highlight the players of a local team to their local viewers.

According to a second aspect the present disclosure suggests an automatic camera system comprising a main camera, a robotic camera and a production server which are interconnected by a communication network. The main camera captures a scene and provides the video images to the production server. The production server hosts an application determining parameters of the main camera wherein the parameters define location and operating status of the main camera, and wherein the application is configured to estimate a parameters for the robotic camera such that the robotic camera captures the scene or a portion of the scene from a different perspective than the main camera. The robotic camera provides the video images to the production server. The application analyses video images from the robotic camera to determine whether the video images meet predefined image criteria. The application is configured to adapt one or several of the parameters of the robotic camera if one or several image criteria are not met, whereby after the adaptation of the parameters of the robotic camera, the video images from the robotic camera meet or at least better meet the predefined image criteria.

This automatic camera system is appropriate for implementing the method according to the first aspect of the present disclosure and, therefore, brings about the same advantages as the method according to the first of the present disclosure.

In an embodiment of the automatic camera system, the main camera is a human operated camera or stationary wide field-of-view camera.

Advantageously, the automatic camera system can comprise a plurality of robotic cameras. A plurality of robotic cameras increases the number of additional views that can be made available for the production director enabling him to offer the viewers of the game close-up views from different perspectives.

According to an improvement the automatic camera system comprises several main cameras. Each main camera is associated with at least one robotic camera and wherein the application is configured to determine parameters of each main camera and to estimate parameters for the at least one associated robotic camera such that the at least one associated robotic camera captures the scene or a portion of the scene from a different perspective than the associated main camera. An advantage of this camera system is that several scenes can be captured simultaneously. The main cameras are human operated cameras or wide field-of-view cameras or a combination thereof.

In another embodiment of the automatic camera system comprising several human operated cameras. The application is configured to determine the parameters of each human operated camera. The entirety of the parameters of the several human operated cameras is utilized to estimate parameters for the robotic camera such that the robotic camera captures the scene or a portion of the scene from a different perspective than the human operated cameras.

It has been found very useful to implement in the automatic camera system a user interface enabling an operator to manually select an area in the image of the main camera. this feature enables the production director to override the decision of the camera man who is operating the main camera. The production director may take an ad hoc decision and select a different scene to be captured by the one or several robotic cameras. This feature provides additional flexibility to the automatic camera system.

### Brief Description of Drawings

Exemplary embodiments of the present disclosure are illustrated in the drawings and are explained in more detail in the following description. In the figures the same or similar elements are referenced with the same or similar reference signs. It shows:
- Fig. 1: a football playing field with a plurality of cameras;
- Fig. 2: schematic diagram of an automatic camera system;
- Fig. 3A: a soccer game playing field in a top view with predefined positions;
- Fig. 3B: the soccer game playing field of Fig. 3A in a perspective view;
- Fig. 4: a different illustration of the automatic camera system shown in figure 2;
- Figs. 5A-5C: an illustration of the use of two main cameras capturing a playing field; and
- Fig. 6: a flow diagram illustrating a method for operating a robotic camera system.

### Detailed Description

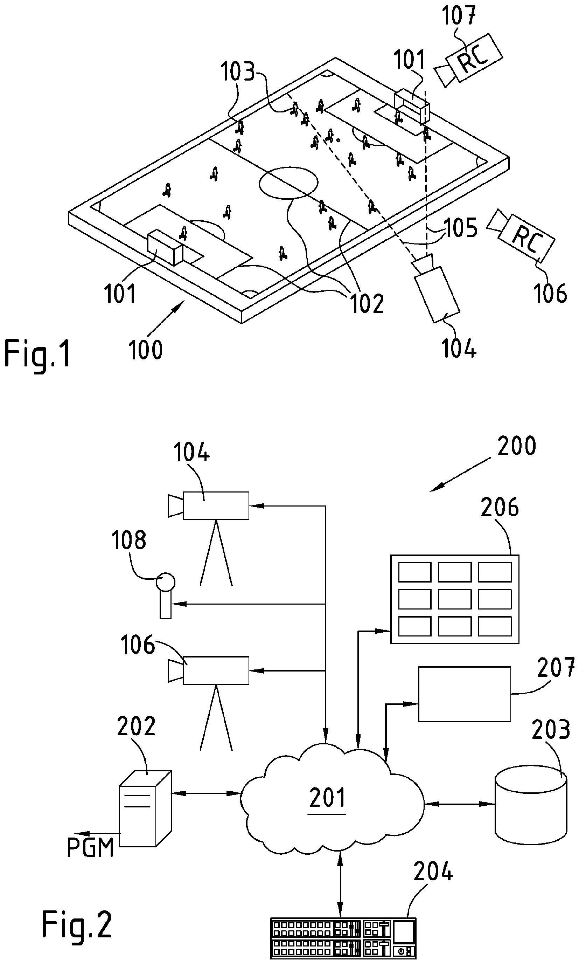

Figure 1 displays a perspective view on a soccer game playing field 100. Goals 101 are located at the respective ends of the playing field 100. Field lines 102 and players 103 are visible on the playing field 100. From a point outside of the playing field 100 a human operated main camera 104 covers a portion of the playing field 100. A current field-of-view of the main camera 104 is indicated with dashed lines 105. The field-of-view covers a supposedly interesting scene on the playing field because many players are in front of a goal 101. This interesting scene represents a region of interest (ROI) for which there are two manifestations. Firstly, the region of interest is in the video images taken by the main camera 104. This first manifestation is called in the following "image region of interest". The image region of interest can be the entire frame of a video image or only a portion of the video image. For the sake of simplicity, it is assumed in the following that the image region of interest corresponds to the full frame of a video image that is captured by the main camera 104. Secondly, the region of interest is also a physical area on the playing field that is covered by the main camera 104. This second manifestation of the region of interest is called in the following "physical region of interest".

In addition to the main camera 104, Figure 1 displays two additional robotic cameras 106,107 located around the playing field. The robotic cameras 106, 107 are movable on tracks (not shown) to change their position and can be operated to take different viewpoints as well as different Pan/Tilt/Zoom (P/T/Z) settings. The robotic cameras 106,107 are equipped with an optical zoom. Therefore, the robotic cameras 106,107 can zoom into a scene and provide details with high resolution of the scene. Even though Figure 1, only shows two robotic cameras, in practical embodiments, there may be more robotic cameras, for instance eight robotic cameras, namely three along each side-line and one behind each goal. of course, other configurations, including a different number of robotic cameras are possible. Furthermore, in some embodiments there are more than one human operated cameras. Nevertheless, for the sake of simplicity and clarity the description is focused on only one human operated camera 104 and two robotic cameras 106,107 because the principles of the present disclosure do not depend on the number of cameras.

The present disclosure aims at enhancing the work of the human camera operator, in particular with close-up video images that are taken from the scene that is currently recorded by the main camera. The close-up video images are captured by additional cameras, in particular by robotic cameras not requiring a cameraman to keep production costs low.

In one embodiment, the main camera 104 is a high-resolution 360° camera and an operator extracts views from the camera feed of the 360° camera as virtual camera feed. The virtual camera feed corresponds to the camera feed of a movable human operated camera. For the sake of conciseness, the implementation of the present disclosure is described in the following only in the context of a movable human operated main camera 104. But the present disclosure is also applicable to a stationary high-resolution 360° camera supplying a virtual camera feed. Regardless of the type of the main camera, i.e. virtual or human operated, the camera feed of the main camera is linked with camera parameters defining the location, the orientation and the operating state of the camera. The camera parameters encompass coordinates relative to fixed point in the stadium and P/T/Z parameters.

To practice the present disclosure, it is necessary to determine the camera parameters that have been chosen by the human operator of the main camera 104. This will be explained in the next section.

### Main camera

The main camera 104 is operated by a human operator who selects the position of the camera, i.e., its location outside the playing field and the camera settings including P/T/Z parameters. Methods of how this can be achieved are known in the prior art, e.g. in European patent application EP3355587 A1 or US patent application 2016/0277673 A1. The method is essentially based on matching known points with points in the human operated camera video. In the example of the football playing field shown in Figure 1 the known points on playing field are for instance corners or crossing points of field lines. A sufficient number of point correspondences between known points and points in the camera video enables calculating a good estimate of the camera parameters based on an image taken by the camera.

### Robotic cameras

Robotic cameras can move on tracks, change their location, orientation and other settings by controlling corresponding actuators by an application running on dedicated control unit or on a production server. All robotic cameras 106, 107 are calibrated. "Calibrated camera" means that a one-to-one relationship between the physical region of interest on the playing field and corresponding camera parameters already exists. In other words: Each image taken by a specific robotic camera can be associated with corresponding camera parameters and vice versa. The necessary data for the one-to-one relationship between the physical region of interest on the playing field and corresponding camera parameters are generated during a calibration process that is described further below.

### Automatic camera system

Figure 2 shows a schematic diagram of an automatic camera system 200. The cameras 104, 106, a microphone 108 are shown as representatives for all other input devices providing video, audio and meta-data input feeds to a communication network 201. The communication network 201 connects all devices involved in the broadcast production. The communication network 201 is a wired or wireless network communicating video/audio data, meta-data and control data between the broadcast production devices. The meta-data include for example settings of the camera corresponding to a video feed. A production server 202 stores all video/audio data as well as meta-data and, in addition to that, intermediate video/audio material such as clips that have been prepared by the operator or automatically by background processes running on the production server 202. A database 203 stores clips and other video/audio material to make it available for a current broadcast production. Even though the database 203 is shown in Figure 2 as a separate device it may as well be integrated in the production server 202. Finally, the communication network 201 is connected with a video/audio mixer 204 (production mixer) to control the broadcast production devices. Since the camera feeds of the human operated camera 104 and the robotic cameras 106, 107 are provided to the video production server 202, the production director can select a specific camera view to be presented to the viewers or slow-motion clips that have been prepared in the background and stored in the database 203. The result of the creative work of the production director is provided a program output feed PGM by the production server 202.

The automatic camera system 200 further comprises multiviewer 206 displaying the video feeds of all cameras. Furthermore, there is a graphical user interface 207 including a touch sensitive screen enabling the production director to select a certain scene captured by one of the available cameras as the region of interest. The selected camera may not necessarily be the main camera 104. In one embodiment, the multiviewer 206 and the graphical user interface 207 can be the same display device.

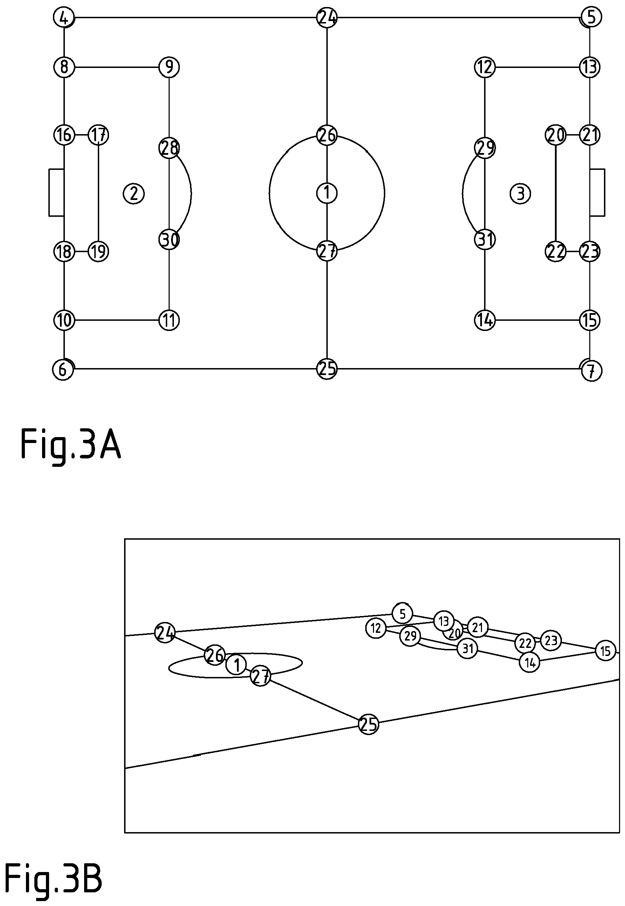

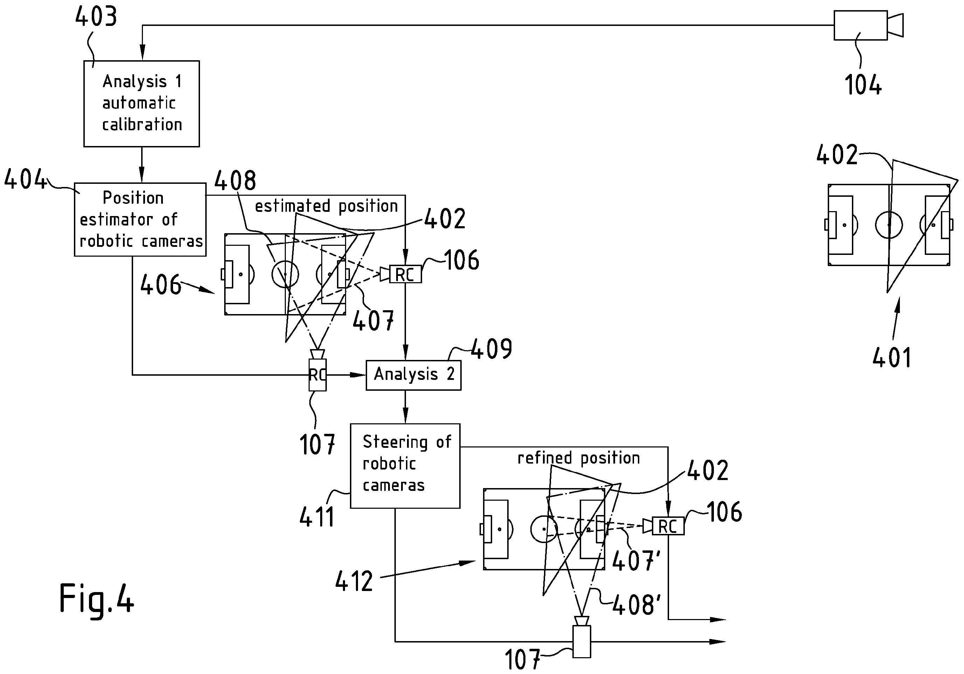

The production server 202 hosts an application 403 (Analysis 1; Figure 4) which analyses images taken by the main camera 104 to extract the camera parameters of the main camera. To this end, the application matches predefined locations in the video images with the corresponding locations on the playing field. In one embodiment of the present disclosure, the predefined locations are intersections of field lines on the playing field. Figure 3A shows intersections of field lines on a soccer field. Each intersection is marked with a circle having an index number 1 to 31 in the circle. Of course, the present disclosure is not limited to intersections of field lines. Any easily identifiable location can be used equally well.

The application detects corresponding locations in the camera image as it is shown in Figure 3B and generates for each pixel in the camera image a triplet composed of the geometric position of the pixel in the image and a class identifying whether the pixel corresponds to one of the predefined locations: (x,y,class). Based on these triplets the application calculates a geometric transformation that transforms the image region of interest captured by the camera 104 into a physical region of interest. Then the application applies a pinhole model to determine the location and P/T/Z parameters of camera 104. the pinhole model is commonly used to determine the projected aspects of a camera. The location may be expressed in two-dimensional coordinates describing the distance of the camera from a given reference point in the stadium. The parameters in their entirety are referenced as "parameter set" for the camera.

In an alternative embodiment the parameters for the human operated camera 104 is determined by means of an instrumented tripod being equipped with sensors that capture the location and the P/T/Z parameters of the camera. The practical implementation of both approaches is known to the skilled person.

The parameter set for the human operated camera is processed by a position estimator algorithm to determine the location and the settings for one or several robotic cameras in the stadium that enable capturing a similar region of interest that is captured by the human operated camera 104.

Alternatively, the application 403 analyses the image of the main camera and determines a region of interest within the image of the main camera according to predefined rules such as where is the ball, which player is in ball possession, etc.

There is yet another possibility to determine appropriate parameters for the robotic cameras. For instance, in ball games there are situations that define a region of interest by themselves, e.g. a corner or penalty in a football game. If such situation is detected either by a human operator or automatically by image analysis, then application 403 issues a trigger signal that is linked with predefined parameters of the robotic cameras 106,107. In response to the presence of the trigger signal the production server issues corresponding command signals to the robotic cameras 106,107 to steer them into a desired position and desired camera setting corresponding to the predefined parameters. It goes without saying that different events are linked with different trigger signals. Each trigger signal is bound with predefined parameters for the robotic cameras.

By default, but not necessarily, the robotic cameras apply a bigger zoom providing more details of the scene that is captured by the main camera 104. In this way the robotic cameras supply different views of the same scene that is captured by the human operated main camera 104 to the production server 202 , enabling the broadcast director to select on the spot zoomed-in images of the current scene from different perspectives depending on the number of robotic cameras that have been selected to capture this particular scene.

This concept will be described in greater detail in connection with Figure 4. Figure 4 is another schematic block diagram of the automatic camera system 200 implementing the present disclosure. The human operated camera 104 captures a scene on the playing field 100 which is symbolized by the diagrammatic icon 401. In icon 401 the field-of-view of camera 104 is depicted by a triangle 402. The video feed of camera 104 is provided to the production server. Instead of showing the production server 202, Figure 4 symbolizes algorithms and applications running on the production server 202 processing the data provided by the main camera 104 and the robotic cameras 106, 107.

The video feed of camera 104 is used to be integrated in the program output feed PGM (Figure 2) and at the same time as an input for application 403 labelled "Analysis 1" running on the production server 202. The application 403 Analysis 1 has already been described in connection with Figures 3A and 3B and provides as an output the parameters of camera 104. The parameters of camera 104 are utilized in an algorithm 404 to estimate the position of the robotic cameras 106, 107 that are capable to capture the same scene as the main camera 104. It is noted that camera 104 and the robotic cameras 106, 107 are not necessarily on the same height level in the stadium and typically the robotic cameras are closer to the playing field. Therefore, the robotic cameras have a different perspective on the playing field 100 and, consequently, the parameters of camera 104 only permit to estimate the desired positions of the robotic cameras. Once the desired positions of the robotic cameras are estimated, application 404 outputs control commands to the robotic cameras to drive them into the desired positions including their P/T/Z parameters. This situation is symbolized in icon 406. The fields of view of the robotic cameras 106, 107 are depicted by triangles 407 and 408. It is noted to that the optical zoom of the robotic cameras 106, 107 is bigger than the one of the human operated camera 104 and, therefore, provide more details than the image of camera 104.

Like the human operated camera 104 the robotic cameras 106, 107 provide their camera feeds to the broadcast server 202. Algorithm 409 labelled "Analysis 2" is running on the production server 202 and performs an image analysis on the camera feeds of the robotic cameras 106, 107. The image analysis is based for example on player positions and/or players morphology, i.e. the relative positions of the players in the currently captured scene. Techniques such as player identification (which pixels are a player) or RFID chips carried by the players are used. The algorithms for following players may utilize the shirt number or RFID chips carried by the players. Likewise, the algorithms may apply the concept "follow the ball". Algorithm 409 is also configured to exploit external information, namely the occurrence of a penalty or corner as described in connection with algorithm 403. Additional analysis techniques are also applied, that is to check the visual quality of the images, to ensure that the camera framing is well done, e.g. to avoid that players are cut in half or other problems degrading the quality experience of the user.

The algorithm 409 also applies rules reflecting the rules of the game play in order to decide which portion of the scene, corresponding to the region of interest, should be captured from a different perspective by the robotic cameras. For instance, the region of interest may be the player who is supposed to receive the ball; upon a corner, it is the player who is doing the corner; and upon a penalty, it is the player doing the penalty and/or at the goalkeeper.

Hence, the result of algorithm 409 is used to refine the position of the robotic cameras and an algorithm 411 outputs corresponding control commands for the robotic cameras. "Position" means in this context both the location of the camera in the stadium as well as the P/T/Z camera parameters. Corresponding control commands are transmitted from the production server to the robotic cameras 106, 107. The result of the refined positions of robotic cameras 106, 107 is illustrated by slightly different fields of view delineated as triangles 407' and 408', respectively, in icon 412.

The camera feeds of the human operated camera 104 and the robotic cameras 106, 107 are provided to the video production server or a mixer making zoomed-in views of interesting scenes or events on the playing field automatically available for the production director. I.e. the zoomed-in views are available without delay and without any additional human intervention.

Many times, a close-up image of a specific player is desirable. A close-up is made by firstly identifying the position of the player. This can be done either by relying on external position coordinates, or by image analysis of the main camera. In the case of image analysis, either an explicit position search and player tracking is done for each of the camera images, either the production crew indicates the player once in the image, followed by object tracking of that player using matching techniques. Based upon the player position, the robotic camera is steered to capture the player at that given position. The use of multiple human operated or wide field-of-view cameras as reference will improve the position accuracy, both by the increased effective resolution and coverage, but especially because of the 3D modeling of the scene and the player resulting in a volumetric model of the player, allowing for a finer grain position of the robotic camera. It is possible to point the robotic camera to capture the 3D area including the player.

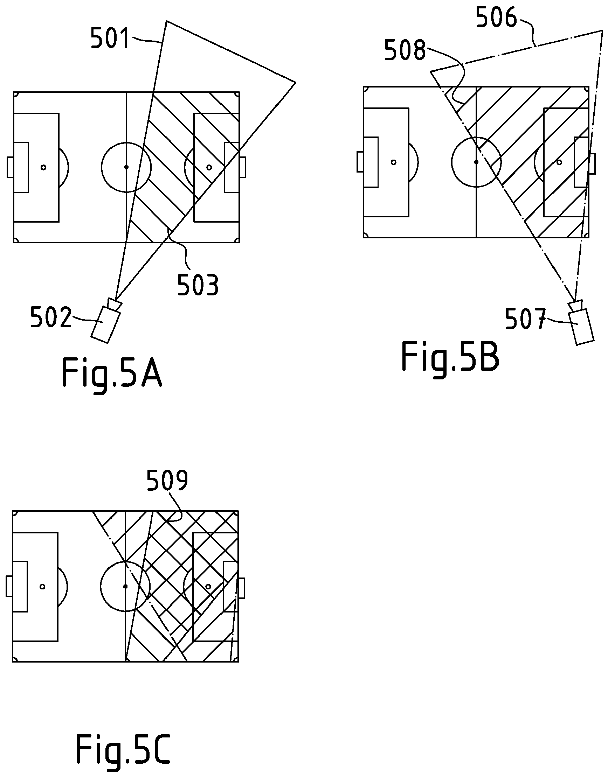

Figures 5A-5C illustrate how the information from two main camera are combined to get a better coverage of a scene resulting in a better steering of the robotic cameras, which are not shown in Figures 5A-5C. The concept remains the same if there are more than two main cameras. Furthermore, the concept does not depend on the nature of the main camera, i.e. it is independent whether a human operated camera or a wide field-of-view camera or a combination of both is utilized in practice.

In Figure 5A, a triangle 501 symbolizes the field-of-view of human operated camera 502. The ROI captured by camera 502 is indicated as hatched area 503. In a similar way, in Figure 5B a triangle 506 symbolizes the field-of-view of human operated camera 507. The ROI captured by camera 507 is indicated as hatched area 508. Figure 5C shows how the ROIs 503, 508 captured by cameras 502, 507 overlap. The combination of both ROIs 503, 508 is shown as crosshatched area 509. As a result, the combination of the two cameras 502, 507 makes more information available because the combination of the images of both cameras 502, 507 gives a wider coverage of the playing field compared to the images of the individual cameras 502, 507. Furthermore, the combination of the images of the cameras 502, 507 increases the effective resolution of the ROI because more pixels are available due to the fact that two cameras capture at least partially the same area of the playing field.

The combination of multiple camera angles allows to construct a 3D model of the scene, amongst others based on triangularization, which contains more information than a planar 2D single camera projection. A 3D model of the scene enables better analyses of the football play and, in particular, improved image analyses. Consequently, the robotic cameras will be better positioned because the steering of the robotic camera is based on a 3D model rather than only based on the 2D planar projection. This allows to have better positioning for the robotic cameras and better image framing.

Independently of the number of main cameras, the algorithm 409 outputs a result that delineates the player who is object of the close-up to ensure that this player is well represented in the close-up. "Well represented" means in this context that the object of the close-up is not obstructed by another player or an object in front of the robotic camera capturing the close-up. If such obstruction is detected or if the view on the object of the close-up can still be improved, the algorithm 409 determines adapted parameters for the robotic cameras, based on a much higher resolution information because the robotic camera returns the close-up feed, allowing for a detailed modelling of the player.

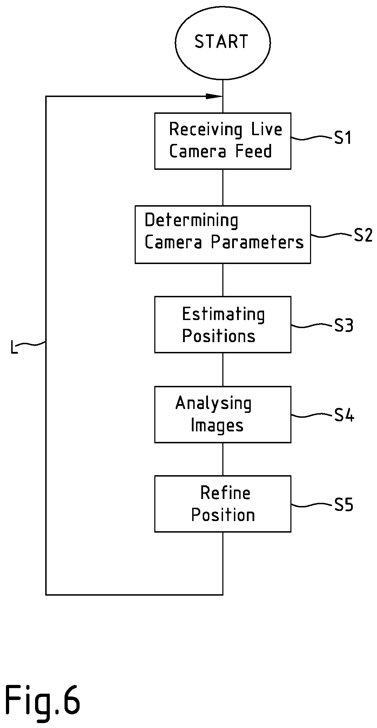

A method for controlling one or several robotic cameras is described in the following in connection with a flow diagram shown in Figure 6. The method begins with receiving a live camera feed from a main camera in step S1. An application permanently detects camera parameters of the main camera 104 by analysing the live images in step S2. The camera parameters of the main camera 104 are the starting point to estimate in step S3 parameters of the robotic cameras such that the robotic cameras capture essentially the same scene as the main camera 104. The images of the robotic cameras are analysed in more detail in step S4. The result of this analysis typically entails a refined position for the robotic cameras to obtain the best shot on the ROI. Consequently, the robotic cameras are steered in step S5 into the refined position. The steps S1 to S5 are executed permanently as long as the main camera 104 provides main images as it is symbolized by the feedback loop L. If one or both robotic cameras 106,107 capture a close-up image, algorithm 409 delineates the player that is object of the close-up and to ensure that the player is well represented in the close-up. for the close-up.

The present disclosure provides close-up views captured by robotic cameras that correspond to the scene currently captured by a main camera. The production director can select one or several of the close-up views without delay to be included in the program feed PGM. This feature makes a broadcast production more appealing to the viewer without requiring additional production staff.

Even though the present disclosure has been described in connection with a human operated camera, other human demonstration input can be used to identify a region of interest in the same way. For example, if a lecture is covered a human operator follows the lecturer with a directional microphone. If of the directional microphone is equipped with sensors to determine its physical position and direction, these data can be used to identify the region of interest and to control one or several robotic cameras in an appropriate way to cover the region of interest identified by the directional microphone.

A soccer or football game has been chosen as an example to demonstrate how the present disclosure works. However, the concept of the present disclosure can be applied also to other ball games, like basketball, volleyball etc.

In the present application the terms "video feed", "video image(s)", "camera feed" are used in a synonymous sense, i.e. describing one video image or a series of video images.

In the described embodiments applications for implementing the present disclosure are hosted on the production server 202. However, the applications can be hosted on a different computer system as well.

**Reference Signs List**

| | | | |
|---|---|---|---|
| 100 | playing field | 506 | triangle/field-of-view |
| | | | |
| 101 | goals | 507 | human operated camera |
| 102 | field lines | 508 | region of interest |
| 103 | players | 509 | combined ROI |
| 104 | main camera | | |
| 105 | field-of-view | | |
| 106, 107 | robotic camera | | |
| 108 | microphone | | |
| | | | |
| 200 | automatic camera system | | |
| 201 | communication network | | |
| 202 | production server | | |
| 203 | database | | |
| 204 | production mixer | | |
| | | | |
| 206 | multiviewer | | |
| 207 | GUI | | |
| | | | |
| 401 | icon | | |
| 402 | field-of-view | | |
| 403 | application (Analysis 1) | | |
| 404 | application (estimation) | | |
| | | | |
| 406 | icon | | |
| 407, 408 | field-of-view | | |
| 409 | algorithm | | |
| 411 | algorithm | | |
| 412 | icon | | |
| | | | |
| 501 | triangle/field-of-view | | |
| 502 | human operated camera | | |
| 503 | region of interest | | |

## Claims

1. Method for operating an automatic camera system comprising at least one main camera (104), a robotic camera (106,107) and a production server (202), wherein the method comprises
- receiving video images from the main camera (104) capturing a scene;
- determining parameters of the main camera while it captures the scene, wherein the parameters define location and operating status of the main camera;
- processing the parameters of the at least one main camera (104) to estimate parameters for the robotic camera (106,107), wherein the parameters for the robotic camera define location and operating status of the robotic camera such that the robotic camera captures the scene or a portion of the scene from a different perspective than the at least one main camera;
- receiving video images from the robotic camera;
- analysing the video images from the robotic camera, according to an algorithm to determine whether the video images meet predefined image criteria; and
- if one or several image criteria are not met, adapting one or several of the parameters of the robotic camera (106,107) such that the video images from the robotic camera meet or at least better meet the predefined image criteria.

2. Method according to claim 1, wherein the method further comprises receiving the video images of the at least one main camera (104) and/or the robotic camera (106,107) at the production server (202).

3. Method according to claim 1 or 2, wherein the method further comprises
- analysing the video images from the at least one main camera (104) for determining parameters of the at least one main camera.

4. Method according to one of the preceding claims, wherein the method further comprises
- receiving video images from one or several human operated cameras (502,507) and/or one or several stationary wide field-of-view cameras serving as the at least one main camera.

5. Method according to claim 4, wherein the method further comprises
- combining the entirety of the parameters of the one or several human operated cameras (502,507) and/or one or several stationary wide field-of-view cameras to estimate parameters for the robotic camera such that the robotic camera captures the scene or a portion of the scene from a different perspective than the human operated cameras.

6. Method according to one of the preceding claims, wherein the method further comprises
- processing the parameters of the at least one main camera (104) to estimate parameters for a plurality of robotic cameras (106,107), wherein the parameters associated with one specific robotic camera define location and operating status of this specific robotic camera such that the robotic camera captures the scene or a portion of the scene from a different perspective than the at least one main camera.

7. Method according to one of the preceding claims, wherein the method further comprises
- receiving and analysing video images from each robotic camera (106,107) to determine adapted parameters for each robotic camera, wherein the analysis comprises player position detection, ball position detection and applying rules to identify a region of interest; and
- using the adapted parameters to individually refine the setting of each robotic camera.

8. Method according to one of the preceding claims, wherein the method further comprises
- capturing a close-up view of the scene with the robotic camera(s).

9. Method according to one of the preceding claims, wherein the method further comprises
- reading out sensor data of sensors mounted in the at least one main camera and/or a tripod carrying the at least one main camera to determine the parameters of the at least one main camera defining location and operating status of the at least one main camera.

10. Method according to one of the preceding claims, wherein the method further comprises
- receiving a trigger signal that is linked with predefined parameters of the robotic camera 106,107).

11. Method according to one of the preceding claims, wherein the method further comprises
- manually selecting an area in the image of the at least one main camera;
- determining parameters for the robotic camera (106,107), wherein the parameters define location and operating status of the robotic camera such that the robotic camera captures a scene corresponding to the area selected in the image of the at least one main camera.

12. Automatic camera system comprising a main camera (104), a robotic camera (106,107) and a production server (202) which are interconnected by a communication network (201),
- wherein the main camera captures a scene and provides the video images to the production server (202);
- wherein the production server hosts an application (403,404) determining parameters of the main camera, wherein the parameters define location and operating status of the main camera (104), and wherein the application (403,404) is configured to estimate a parameters for the robotic camera such that the robotic camera captures the scene or a portion of the scene from a different perspective than the main camera;
- wherein the robotic camera (106,107) provides the video images to the production server; and
- wherein the application (409) analyses video images from the robotic camera to determine whether the video images meet predefined image criteria; and
- wherein the application (409) is configured to adapt one or several of the parameters of the robotic camera if one or several image criteria are not met, whereby after the adaptation of the parameters of the robotic camera, the video images from the robotic camera meet or at least better meet the predefined image criteria.

13. Automatic camera system according to claim 12, wherein the main camera is a human operated camera or stationary wide field-of-view camera.

14. Automatic camera system according to claim 12 or 13, wherein the automatic camera system comprises a plurality of robotic cameras (106,107).

15. Automatic camera system according claim 13, wherein the automatic camera system comprises several main cameras (502,507), wherein each main camera is associated with at least one robotic camera and wherein the application (403,404) is configured to determine the parameter set of each main camera and to estimate parameters for the at least one associated robotic camera such that the at least one associated robotic camera captures the scene or a portion of the scene from a different perspective than the associated main camera (502,507).

16. Automatic camera system according claim 11, wherein the automatic camera system comprises several human operated cameras (502,507), wherein the application is configured to determine the parameter set of each human operated camera and to estimate parameters for the robotic camera such that the robotic camera captures the scene or a portion of the scene from a different perspective than the human operated cameras.

17. Automatic camera system according to one of the preceding claims, wherein the automatic camera system comprises a user interface enabling an operator to manually select an area in the image of the main camera.
